# FASCICULE DE BREVET EUROPEEN

(11) **EP 3 344 916 B1**
(45) Date de publication et mention de la délivrance du brevet: **30.10.2019**
(21) Numéro de dépôt: 16763905.3
(22) Date de dépôt: 10.08.2016
(51) Int. Cl.: B60Q 1/26, F21S 43/33, F21S 45/10

(54) **DISPOSITIF DE SIGNALISATION LUMINEUSE D'UN VEHICULE AUTOMOBILE**
LICHTSIGNALVORRICHTUNG EINES KRAFTFAHRZEUGS
LIGHT-SIGNALING DEVICE OF A MOTOR VEHICLE

(30) Priorité: 03.09.2015 FR 1558152
(43) Date de publication de la demande: 11.07.2018
(73) Titulaire: PSA AUTOMOBILES S.A., 78300 Poissy (FR)
(72) Inventeur: CARROUGET, Alain, 28700 Levainville (FR); SIMANDRE, Stephane, 28130 Chartainvilliers (FR)
(86) Numéro de dépôt international: PCT/FR2016/052061
(87) Numéro de publication internationale: WO 2017/037358

(56) Documents cités:
- WO-A1-2015/089700
- CN-U- 204 042 674
- US-A1- 2009 034 282

## Description

L'invention concerne les dispositifs d'éclairage ou de signalisation, destinés plus particulièrement aux véhicules automobiles. L'invention porte plus précisément sur un dispositif de signalisation lumineuse comprenant une pluralité de sources de lumière.

Les dispositifs d'éclairage comprennent principalement les projecteurs de faisceaux de croisement, de route, d'antibrouillard ou de circulation diurne, tandis que les feux de signalisation comprennent principalement les feux de position, les feux indicateurs de changement de direction, les feux indicateurs de freinage, les feux de recul, les feux arrière de brouillard. Dans ce contexte, la présente invention porte sur un dispositif de signalisation lumineuse, notamment sur un dispositif de feu arrière.

De manière connue, un dispositif de signalisation lumineuse est disposé à l'arrière d'un véhicule automobile afin de donner des informations aux autres usagers de la route : par exemple pour indiquer un freinage, un changement de direction ...etc. Pour ce faire, le dispositif de signalisation lumineuse comprend une pluralité de sources lumineuses indiquant lesdites informations.

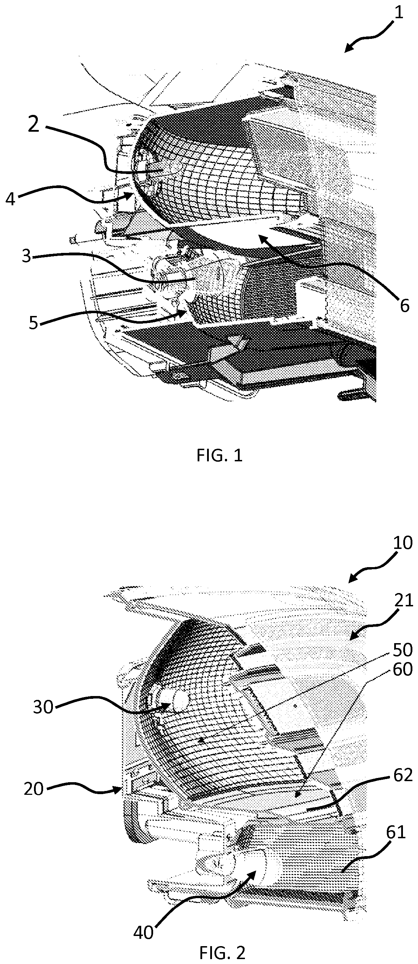

Afin de différencier chaque information, il est connu de séparer le flux lumineux de chaque source avec des réflecteurs. Pour ce faire, comme illustré à la figure 1, un dispositif de signalisation lumineuse 1, comprenant dans le cas présent un feu de positionnement 2 et un feu de freinage 3, comprend en outre un premier réflecteur 4 réfléchissant la lumière émise par le feu de positionnement 2 et un deuxième réflecteur 5 réfléchissant la lumière émise par le feu de freinage 3.

Cependant, un tel dispositif 1 présente des inconvénients. En effet, le feu de positionnement 2 dégageant peu de chaleur et le feu de freinage 3 dégageant beaucoup de chaleur, du fait de leurs intensités lumineuses respectives, le dispositif 1 comprend en outre une pièce métallique 6 d'isolation thermique adaptée pour protéger le feu de positionnement 2 de la chaleur dégagée par le feu de freinage 3. Une telle pièce métallique est complexe et coûteuse à assembler.

On connait également du document US2009034282 un dispositif conforme au préambule de la revendication 1.

L'invention vise donc à résoudre ces inconvénients en proposant un dispositif de signalisation lumineuse simple, fiable et peu coûteux, permettant une isolation thermique et lumineuse de deux sources de lumière.

Pour parvenir à ce résultat, la présente invention concerne un dispositif de signalisation lumineuse d'un véhicule automobile, conforme à la partie caractérisante de la revendication 1.

Grâce au dispositif selon l'invention, seul le réflecteur de la source de lumière dégageant de la chaleur est réalisé dans un matériau ayant une résistance thermique élevée afin de limiter le coût de fabrication d'un tel dispositif. De plus, le deuxième réflecteur permet d'isoler thermiquement les sources de lumière afin de protéger la première source de lumière.

Avantageusement, le deuxième réflecteur est adapté pour former une partie des moyens de réflexion de la première source de lumière.

Avantageusement, le premier réflecteur est réalisé en ABS.

Avantageusement, le deuxième réflecteur est réalisé en polycarbonate.

De manière avantageuse, le dispositif comprenant un boîtier de montage des première et deuxième réflecteurs, le premier réflecteur est issu de matière dudit boîtier.

Avantageusement, le deuxième réflecteur comprend un corps principal formant les moyens de réflexion de la deuxième source de lumière et un corps secondaire formant une partie des moyens de réflexion de la première source de lumière.

De préférence, le corps principal et le corps secondaire du deuxième réflecteur définissent un volume de refroidissement.

Avantageusement, le dispositif de signalisation lumineuse est un dispositif arrière de signalisation lumineuse d'un véhicule automobile.

L'invention vise également un véhicule automobile comprenant au moins un dispositif de signalisation visuelle tel que décrit précédemment.

D'autres caractéristiques et avantages de l'invention apparaîtront à la lecture de la description détaillée des modes de réalisation de l'invention, donnés à titre d'exemple uniquement, et en référence aux dessins qui montrent :
- figure 1, un schéma d'un dispositif de signalisation lumineuse selon l'art antérieur,
- figure 2, un schéma d'une forme de réalisation d'un dispositif de signalisation lumineuse selon l'invention,
- figure 3 et 4, des schémas de face de deux réflecteurs du dispositif de la figure 2, et
- figure 5 à 7, des schémas de côté selon différentes coupes du dispositif de la figure 2.

Dans ce qui va suivre, les modes de réalisation décrits s'attachent plus particulièrement à une mise en oeuvre du dispositif selon l'invention dans le cadre d'un véhicule automobile. Cependant, toute mise en œuvre dans un contexte différent, en particulier dans tout type de véhicule, est également visée par la présente invention.

La figure 2 représente un dispositif de signalisation lumineuse 10 selon l'invention, et plus particulièrement, en l'espèce, un dispositif arrière de signalisation lumineuse.

Ledit dispositif de signalisation 10 comprend un boîtier de protection 20, une première source de lumière 30, une pluralité de deuxièmes sources de lumière 40, un premier réflecteur 50 et un deuxième réflecteur 60.

Le boîtier de protection 20 est réalisé dans un matériau dont le coût est faible, de préférence de l'ABS ou un mélange d'ABS et de polycarbonate. Le boîtier 20 est adapté pour être monté à l'arrière un véhicule automobile (non représenté). Le boîtier 20 permet également le montage des sources de lumière 30, 40 ainsi que des réflecteurs 50, 60 afin de former le dispositif de signalisation lumineuse 10. Le boîtier 20 est fermé par une glace 21 de protection des différents éléments du dispositif 10.

La première source de lumière 30 du dispositif 10 forme le feu de positionnement arrière du véhicule automobile. De préférence, la première source de lumière 30 est montée dans une partie haute du boîtier de protection 20. La première source de lumière 30 est adaptée pour émettre une lumière diffuse, autrement dit une lumière visible selon un grand angle d'orientation afin d'être aisément visible par les autres conducteurs. La première source de lumière 30 consomme une faible quantité d'énergie, de préférence de l'ordre de 10 W, et dégage peu de chaleur.

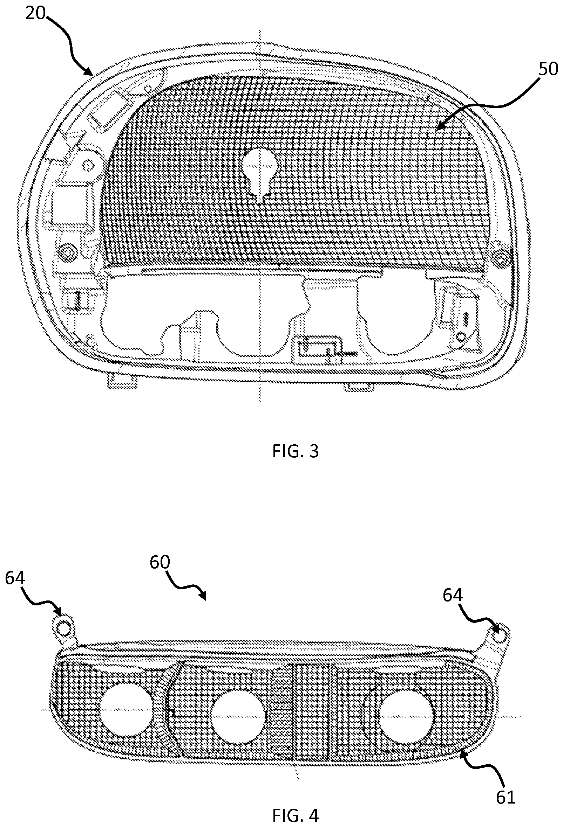

Le dispositif de signalisation lumineuse 10 représenté sur les figures 3 et 4 comprend trois sources de lumière secondaires 40 formant un feu de signalisation d'un freinage, un feu indicateur de changement de direction et un feu antibrouillard. Les deuxièmes sources de lumières 40 sont montées dans une partie basse du boîtier de protection 20. Aussi, lorsque le dispositif de signalisation lumineuse 10 est monté sur un véhicule, la première source de lumière 30 est située au-dessus de la pluralité de deuxièmes sources de lumière 40. Le dispositif de signalisation lumineuse 10 a été présenté avec trois sources de lumières secondaires 40, mais il va de soi qu'il pourrait en comprendre un nombre différent, en particulier au moins une deuxième source de lumière.

Par souci de clarté et de concision, seule une deuxième source de lumière 40 formant le feu de signalisation d'un freinage sera décrite par la suite.

La deuxième source de lumière 40 est adaptée pour émettre une lumière puissante afin de la différencier aisément de la première source de lumière 30 lorsque lesdites première et deuxième sources de lumière 30, 40 sont allumées en même temps. La deuxième source de lumière 40 consomme une quantité d'énergie plus importante, de préférence de l'ordre de 21 W, et dégage une quantité de chaleur plus importante que la première source de lumière 30.

Lorsque le véhicule circule, le feu de positionnement est utilisé de manière continue sur un long intervalle de temps afin d'informer les autres conducteurs de la position du véhicule, tandis que le feu de signalisation d'un freinage est utilisé sur des intervalles de temps plus courts afin d'avertir les autres conducteurs lorsque le frein du véhicule est utilisé. La deuxième source de lumière 40 émet ainsi une lumière plus puissante que la première source de lumière 30 afin de distinguer le feu de signalisation d'un freinage, lorsqu'il est allumé, du feu de positionnement qui est allumé en continu.

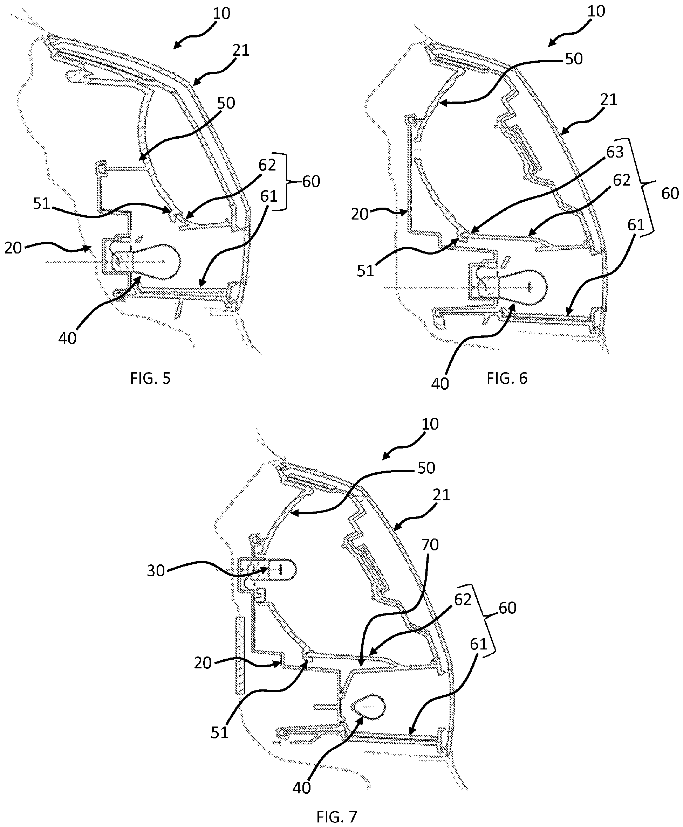

En référence à la figure 3, le premier réflecteur 50 est adapté pour former au moins une partie, de préférence haute, des moyens de réflexion de la première source de lumière 30. Autrement dit, le premier réflecteur 50 réfléchit au moins une partie de la lumière émise par la première source de lumière 30. Comme illustré à la figure 6, le premier réflecteur 50 comprend, de préférence au niveau d'une partie basse, des premiers moyens d'assemblage 51 adaptés pour permettre l'assemblage du premier réflecteur 50 avec le deuxième réflecteur 60 comme cela sera présenté dans la suite de la description. De préférence, les premiers moyens d'assemblage 51 se présentent sous la forme d'une rainure s'étendant longitudinalement.

Le premier réflecteur 50 est réalisé dans un matériau dont le coût est faible, de préférence de l'ABS ou un mélange d'ABS et de polycarbonate. Avantageusement, le premier réflecteur 50 est issue de matière du boîtier 20, ce qui réduit les coûts de fabrication et d'assemblage du dispositif 10 selon l'invention.

En référence à la figure 4, le deuxième réflecteur 60 est adapté pour permettre le montage de la pluralité de deuxièmes sources de lumière 40. Comme illustré aux figures 5 à 7, le deuxième réflecteur 60 comprend un corps principal 61 formant les moyens de réflexion de la deuxième source de lumière 40, un corps secondaire 62 formant des moyens de réflexion de la première source de lumière 30 et des deuxièmes moyens d'assemblage 63 adaptés pour permettre l'assemblage avec le premier réflecteur 50.

Le deuxième réflecteur 60 est réalisé dans un matériau dont la résistance thermique est élevée, de préférence du polycarbonate, afin de résister à la chaleur dégagée par la deuxième source de lumière 40. Le corps principale 61 du deuxième réflecteur 60 est adapté pour former des moyens de réflexion de la deuxième source de lumière 40. Autrement dit, le deuxième réflecteur 60 réfléchit la lumière émise par la deuxième source de lumière 40.

Le corps secondaire 62 du deuxième réflecteur 60 est en outre adapté pour former une partie, de préférence basse, des moyens de réflexion de la première source de lumière 30. Ainsi, la partie haute, formée par le premier réflecteur 50, des moyens de réflexion de la première source de lumière 30 et la partie basse, formée par le corps secondaire 62 du deuxième réflecteur 60, des moyens de réflexion de la première source de lumière 30 forment les moyens de réflexion de la première source de lumière 30 adaptés pour réfléchir la lumière émise par la première source de lumière 30.

Le corps secondaire 62 se présentent sous la forme d'une plaque s'étendant longitudinalement depuis le corps principal 61 au niveau une extrémité proximale jusqu'à une extrémité distale.

Un espace 70 de refroidissement est ainsi formé entre le corps secondaire 62 et le corps principal 61 comme illustré à la figure 7. Un tel espace de refroidissement 70 est adapté pour permettre une circulation d'air afin d'évacuer la chaleur dégagée par la deuxième source de lumière 40 au niveau du deuxième réflecteur 60. Ainsi, le deuxième réflecteur 60 permet de protéger la première source de lumière 30 de la chaleur dégagée par la deuxième source de lumière 40 en isolant thermiquement lesdites sources de lumières 30, 40. Une telle isolation est aisée et peu coûteuse car elle ne nécessite pas de pièces supplémentaires.

En référence à la figure 6, les deuxièmes moyens d'assemblage 63 du deuxième réflecteur 60 sont issus de matière du corps secondaire 62 afin de permettre l'assemblage des parties haute et basse des moyens de réflexion de la première source de lumière 30. De préférence, les deuxièmes moyens d'assemblage 63 sont placés au niveau de l'extrémité distale du corps secondaire 62 et se présentent sous la forme d'une plaque s'étendant longitudinalement et adaptée pour coopérer avec la rainure des premiers moyens d'assemblage 51 du premier réflecteur 50. Ainsi, le deuxième réflecteur 60 est aisément assemblé avec le premier réflecteur 50, par emboîtement des moyens d'assemblage 51, 63. De plus, un tel assemblage est discret et participe ainsi à une qualité perçue élevée du dispositif de signalisation lumineuse 10.

Avantageusement, le deuxième réflecteur 60 est monté dans le boîtier 20 au niveau de deux zones de liaison 64, de préférence grâce à des vis, des ergots, etc, comme illustré à la figure 4. Ainsi, l'assemblage d'un tel dispositif de signalisation lumineuse 10 est aisé, rapide et donc peu coûteux grâce à l'assemblage des premier et deuxième réflecteurs 50, 60 par emboîtement et à la fixation du deuxième réflecteur 60 au boîtier 20 par deux vis.

En résumé, la présente invention vise un dispositif de signalisation lumineuse dans lequel le réflecteur d'une source de lumière dégageant de la chaleur forme également une partie des moyens de réflexion d'une deuxième source de lumière afin d'isoler thermiquement les deux sources de chaleur tout en limitant le coût d'un tel dispositif. En effet, seul le réflecteur de la source de lumière dégageant de la chaleur est réalisé dans un matériau présentant une résistance thermique élevée, tandis que le reste du dispositif peut être réalisé dans un matériau à plus faible coût. Un tel dispositif de signalisation lumineux est ainsi peu coûteux. De plus, il est aisé à assembler grâce aux moyens d'assemblage des réflecteurs.

## Revendications

1. Dispositif (10) de signalisation lumineuse d'un véhicule automobile, ledit dispositif (10) comprenant au moins une première source de lumière (30), une deuxième source de lumière (40), un premier réflecteur (50) adapté pour former au moins une partie des moyens de réflexion de ladite première source de lumière (30) et un deuxième réflecteur (60) adapté pour former des moyens de réflexion de ladite deuxième source de lumière (40), la deuxième source de lumière (40) dégageant plus de chaleur que la première source de lumière (30), **caractérisé en ce que** le deuxième réflecteur (60) présente une résistance thermique supérieure à celle du premier réflecteur (50).

2. Dispositif (10) selon la revendication 1, dans lequel le deuxième réflecteur (60) est adapté pour former une partie des moyens de réflexion de la première source de lumière (30).

3. Dispositif (10) selon l'une des revendications précédentes, dans lequel le premier réflecteur (50) est réalisé en ABS.

4. Dispositif (10) selon l'une des revendications précédentes, dans lequel le deuxième réflecteur (60) est réalisé en polycarbonate.

5. Dispositif (10) selon l'une des revendications précédentes, comprenant un boîtier (20) de montage des première et deuxième réflecteurs (50, 60), le premier réflecteur (50) est issu de matière dudit boîtier (20).

6. Dispositif (10) selon l'une des revendications précédentes, dans lequel le deuxième réflecteur (60) comprend un corps principal (61) formant les moyens de réflexion de la deuxième source de lumière (40), et un corps secondaire (62) formant une partie des moyens de réflexion de la première source de lumière (30).

7. Dispositif (10) selon la revendication précédente, dans lequel le corps principal (61) et le corps secondaire (62) du deuxième réflecteur (60) définissent un volume de refroidissement (70).

8. Dispositif (10) selon l'une des revendications précédentes, étant un dispositif arrière de signalisation lumineuse d'un véhicule automobile.

9. Véhicule comprenant au moins un dispositif de signalisation lumineuse (10) selon l'une des revendications précédentes.

## Patentansprüche

1. Lichtsignalvorrichtung (10) eines Kraftfahrzeugs, wobei die Vorrichtung (10) mindestens eine erste Lichtquelle (30), eine zweite Lichtquelle (40), einen ersten Reflektor (50), der angepasst ist, um mindestens einen Teil der Reflexionsmittel der ersten Lichtquelle (30) zu bilden, und einen zweiten Reflektor (60), der angepasst ist, um Reflexionsmittel der zweiten Lichtquelle (40) zu bilden, aufweist, wobei die zweite Lichtquelle (40) mehr Wärme abgibt als die erste Lichtquelle (30), **dadurch gekennzeichnet, dass** der zweite Reflektor (60) einen Wärmewiderstand aufweist, der größer ist als der des ersten Reflektors (50).

2. Vorrichtung (10) nach Anspruch 1, wobei der zweite Reflektor (60) angepasst ist, um einen Teil der Reflexionsmittel der ersten Lichtquelle (30) zu bilden.

3. Vorrichtung (10) nach einem der vorstehenden Ansprüche, wobei der erste Reflektor (50) aus ABS hergestellt ist.

4. Vorrichtung (10) nach einem der vorstehenden Ansprüche, wobei der zweite Reflektor (60) aus Polycarbonat hergestellt ist.

5. Vorrichtung (10) nach einem der vorstehenden Ansprüche, die ein Gehäuse (20) zur Montage des ersten und zweiten Reflektors (50, 60) umfasst, wobei der erste Reflektor (50) aus einem Stück mit dem Gehäuse (20) besteht.

6. Vorrichtung (10) nach einem der vorstehenden Ansprüche, wobei der zweite Reflektor (60) einen Hauptkörper (61) umfasst, der die Reflexionsmittel der zweiten Lichtquelle (40) bildet, und einen Sekundärkörper (62), der einen Teil der Reflexionsmittel der ersten Lichtquelle (30) bildet.

7. Vorrichtung (10) nach dem vorstehenden Anspruch, wobei der Hauptkörper (61) und der Sekundärkörper (62) des zweiten Reflektors (60) einen Kühlraum (70) bilden.

8. Vorrichtung (10) nach einem der vorstehenden Ansprüche, die eine hintere Lichtsignalvorrichtung eines Kraftfahrzeugs ist.

9. Fahrzeug, das mindestens eine Lichtsignalvorrichtung (10) nach einem der vorstehenden Ansprüche umfasst.

## Claims

1. A light-signalling device (10) of a motor vehicle, said device (10) including at least a first light source (30), a second light source (40), a first reflector (50) suitable for forming at least a portion of the reflection means of the said first light source (30) and a second reflector (60) suitable for forming reflection means of the said second light source (40), the second light source (40) releasing more heat than the first light source (30), **characterized in that** the second reflector (60) has a thermal resistance greater than that of the first reflector (50).

2. The device (10) according to Claim 1, in which the second reflector (60) is suitable for forming a portion of the reflection means of the first light source (30).

3. The device (10) according to one of the preceding claims, in which the first reflector (50) is made from ABS.

4. The device (10) according to one of the preceding claims, in which the second reflector (60) is made from polycarbonate.

5. The device (10) according to one of the preceding claims, including a housing (20) for mounting the first and second reflectors (50, 60), the first reflector (50) is made of the same material as the said housing (20).

6. The device (10) according to one of the preceding claims, in which the second reflector (60) includes a main body (61) forming the reflection means of the second light source (40), and a secondary body (62) forming a portion of the reflection means of the first light source (30).

7. The device (10) according to the preceding claim, in which the main body (61) and the secondary body (62) of the second reflector (60) define a cooling volume (70) .

8. The device (10) according to one of the preceding claims, being a rear light-signalling device of a motor vehicle.

9. A vehicle including at least one light-signalling device (10) according to one of the preceding claims.
